**Europäisches Patentamt**

**European Patent Office**

**Office européen des brevets**

(19)

(11) Publication number : **0 331 106 B1**

(12) **EUROPEAN PATENT SPECIFICATION**

(45) Date of publication of patent specification :
**22.04.92 Bulletin 92/17**

(21) Application number : **89103494.4**

(22) Date of filing : **28.02.89**

(51) Int. Cl.⁵ : **B60R 9/04**

(54) **Luggage bar assembly with supporting and coupling means.**

(30) Priority : **02.03.88 IT 6716388**

(43) Date of publication of application :
**06.09.89 Bulletin 89/36**

(45) Publication of the grant of the patent :
**22.04.92 Bulletin 92/17**

(84) Designated Contracting States :
**CH DE FR LI SE**

(56) References cited :
**EP-A- 0 105 849**
**DE-A- 2 102 440**
**DE-A- 3 315 555**
**DE-A- 3 406 149**
**DE-U- 8 231 083**

(73) Proprietor : **T.D. S.p.A.**
**Corso Matteotti 21**
**Torino (IT)**

(72) Inventor : **Taschero, Giuseppe**
**Strada Orbassano 49**
**I-10040 Volvera (Province of Torino) (IT)**

(74) Representative : **Modiano, Guido et al**
**MODIANO, JOSIF, PISANTY & STAUB**
**Modiano & Associati Via Meravigli, 16**
**I-20123 Milano (IT)**

Jouve, 18, rue Saint-Denis, 75001 PARIS

## Description

The present invention relates to a luggage bar assembly with supporting and coupling means.

Luggage bars currently use complicated and expensive support and coupling means which should allow the bar to be adapted to the different kinds of motor vehicle, especially motor cars, which differ not only in their dimensions but also for the manner in which said coupling means are fixed to the bodywork.

In particular, the aim of making said bars adaptable both to motor vehicles with external driprails and to those with no such driprails entails considerable mechanical complications in the coupling means, which must be able to also exert a transverse retention action which is indispensable to ensure the stability of the bar on motor vehicule of the second type.

EP-A-0 105 849 which shows the features of the first part of claim 1 discloses a load carrier with the object of being suitable for use on any type of vehicle, i.e. with or without a so called rain fillet provided on the roof of the vehicle. Such load carrier comprises a girder extending across the body of a vehicle and being provided near its end with a support adapted to be placed on the body and with a clamping member movable with respect to the support. A mechanically complicated coupling system exists whereby the clamping member is movably coupled with an intermediate element which is pivotable with respect to support, whilst a stretching element in form of a locking bolt is operative between the support or the girder respectively and the clamping member.

On one hand, this complication considerably increases the cost of the luggage bar; on the other hand, it penalizes its reliability, strength and ease of installation, and such considerable disadvantages are not compensated by the adaptability of the bar, which is a characteristic very seldom exploited by the user.

The aim of the present invention is to radically simplify known luggage bars by significantly improving their functionality and allowing, at the same time, to provide structures adaptable to different types of motor vehicle simply by replacing, where necessary, structure elements which differ in dimensions of configuration.

This aim is achieved by the combination of features of claim 1.

The luggage bar assembly according to the present invention is therefore of the dedicated type, as it is constituted by elements which are sized and preset for uniform series of motor vehicles and can be adapted to other series by replacing already-preset structure elements.

In order to achieve this aim and other objects which will become apparent hereinafter from the following detailed description, the present invention relates to a luggage bar assembly as defined in the appended claims.

Further purposes, characteristics and advantages of the present invention will become apparent from the following detailed description and with reference to the accompanying drawings, given only by way of non-limitative example, wherein:

figure 1 is a front elevation view of a luggage bar assembly according to the present invention, in its operative configuration with the uprights and the bar mutually locked;

figure 2 is an elevation view, similar to figure 1, illustrating the structure with the uprights slackened;

figure 3 is an enlarged-scale detail view of figure 1;

figure 4 is an enlarged-scale detail view of figure 2;

figure 5 is a detail view, similar to figure 4, illustrating a variated constructive embodiment of the structure;

figure 6 is a schematic sectional view of the bar, illustrating another variated constructive embodiment;

figure 7 is a detail view of the end of an upright according to a further variated constructive embodiment;

figure 8 is a sectional view taken along the line VIII-VIII of figure 7;

figure 9 is an elevation view of the coupling portion of the upright of figure 7;

figure 10 is a sectional view taken along the line X-X of figure 9.

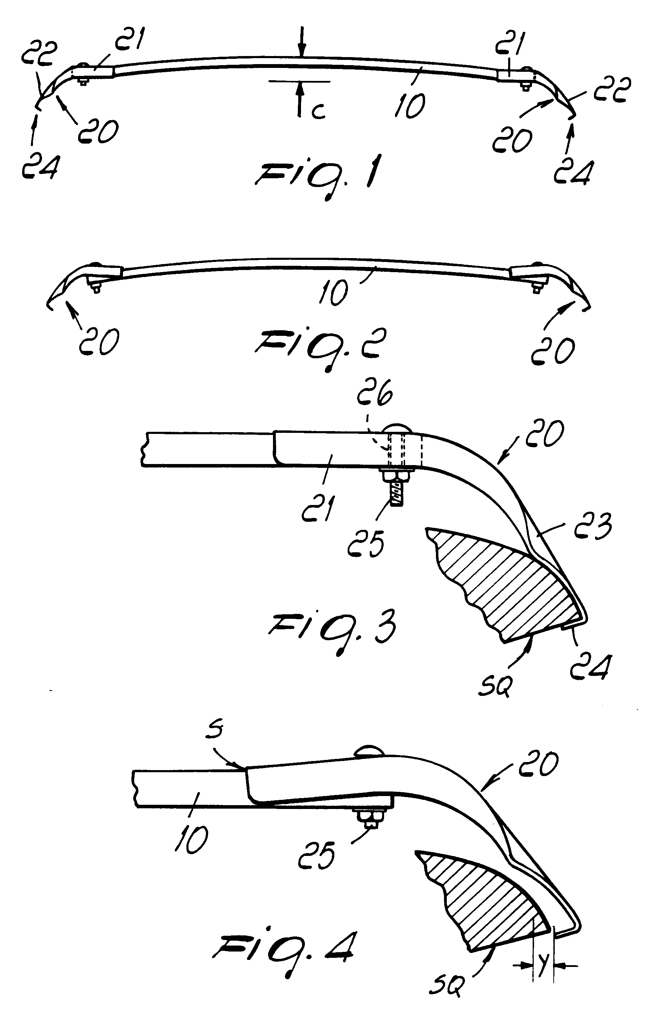

Initially with reference to figures 1 to 4, 10 indicates the luggage bar, termed "carryall", and 20 indicates the uprights provided at its ends and intended to support and couple said bar to the roof of the motor vehicle.

According to the present invention, each of the uprights 20 is constituted by a profiled element with a channel-like portion 21 intended to fit over the corresponding end of the bar 10 and by a flattened coupling portion 22 stiffened by ridges 23 and ending with a wing 24 folded substantially at right angle and adapted to cooperate with a corresponding undercut SQ of the vehicle's bodywork.

A locking bolt 25 co-operates with the channel-like portion 21 of the upright and passes through a hole 26 of the bar; said bolt is sized so as to absorb the flexing and shearing stresses discharged on each upright 20 by the bar 10.

In order to mount or remove the bar, one or both upright connecting bolts 25 are slackened, allowing said uprights to be divaricated by rotating them, in the vertical plane containing the axis of the bar, around the corner s of the terminal edge of the upright.

As clearly illustrated in the detail view of figure 4, the bolts 25 are slackened so as to allow each upright to be divaricated by an amount Y sufficient to allow the wing 24 to pass beyond the undercut SQ, allowing the structural assembly to be located on the roof of the vehicle or to be removed therefrom.

During assembly, the bolt is successively tightened to cause a reverse rotation of the uprights, the wings 24 whereof engage the undercut SQ.

It should be noted that tightening of the bolts 25 produces a locking action on the uprights 20 which also has a considerable transverse component (parallel to the axis of the bar) which is further increased if the bar 10 is given a camber c with the bar's concavity directed towards the roof of the vehicle, thereby affording a more effective retention of the structure.

Besides the indicated purpose of increasing the transverse component of the tightening stress, the camber of the bar 10 furthermore gives a negative pre-deformation to the bar for compensating its deformation when loaded, thus preventing, in such conditions, the loosening of the locking action on the uprights 20.

The variated embodiment of figure 5 differs in that the upright 20a supports the bar 10 by engaging its lower surface, and the upright advantageously has, in this case, a transverse ridge 30 which defines the axis of relative rotation between the bar and the upright during the slackening or tightening of the bolt 25.

The bar 10 (see fig. 6) can be stiffened by means of a tension element 31 arranged in its interior, which by virtue of the bar's camber arranges itself at least partially below the neutral axis of said bar in a position suitable to absorb the traction stresses arising from the flexing of the bar when it is loaded.

The tension element 31 can be advantageously pretensioned, for example by means of a bolt 32 which engages the threaded end 33 of the tension element; the other end of the tension element is stably coupled to the corresponding end of the bar by means of a nipple 34.

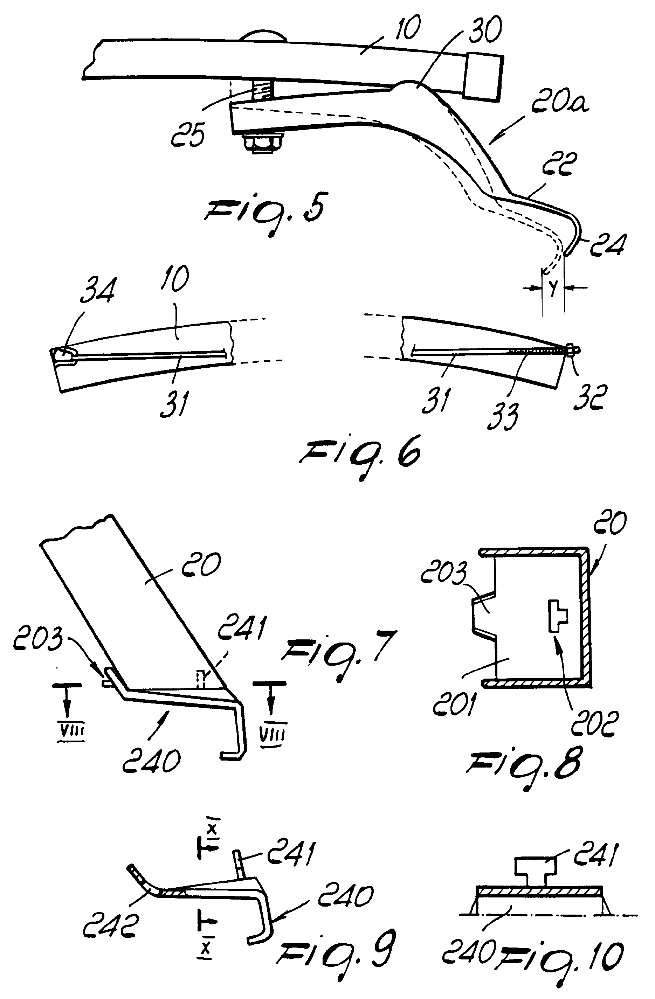

The solution shown in figures 7 to 10 relates to a different embodiment of the uprights 20 adapted to support coupling portions 240 which are removable with respect to said upright; the coupling portions 240 are replaceable with others with different profiles in relation to the type of vehicle on which the bar is mounted.

For this purpose, a base plate 201 is defined at the lower end of each upright, for example by folding at right angle at least one wall of said upright, and has at least one opening 202 and at least one protruding lug 203 which co-operate by insertion coupling with a tab 241 and respectively with a slot 242 of the corresponding coupling portion 240.

For the purpose of retention, the opening 202 and the tab 241 have a substantially T-shaped profile to connect by mutual insertion coupling.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A luggage bar assembly with supporting and coupling means, whereby the bar (10) has end uprights (20;20a) including coupling portions (22, 240) adapted to engage corresponding undercuts (SQ) of the vehicle bodywork, at least one of said uprights being connected to the bar by means of lockable connection means providing a locking bolt (25) which, when unlocked, allows the upright (20;20a) to be divaricated by rotating in a plane containing the axis of the bar (10), to allow the engagement, or the disengagement, of the coupling portions (22;240) with, or from, the related undercut, locking of the connection means causing a reverse rotation of the upright, consequently locking it also transversely with respect to the vehicle, the luggage bar assembly characterized in that said at least one upright is a single rigid angled profiled element (20,20a) defining at opposite ends thereof a flattened coupling portion (22) and a channel-like longitudinal portion (21) for mating engagement in a locked position of the upright with the longitudinal end of the bar (10), said locking bolt of said connection means is provided transversely to said channel-like longitudinal portion (21) and said bar (10) longitudinal end for the mutual locking thereof, tightening of the locking bolt thereby providing a mating locked engagement of the channel-like longitudinal portion (21) with the bar (10) longitudinal end and loosening of the locking bolt (25) thereby allowing a rotation of said rigid angled profile element (20,20a) substantially in the plane containing the axis of the bar (10) so as to provide an adequate divarication (Y) of the coupling portion (22,240) with respect to the undercuts (SQ).

2. A luggage bar assembly according to claim 1, characterized in that said longitudinal portion (21) of said profile element (20) engages with the upper surface of the longitudinal end of the bar (10), said longitudinal portion defining a terminal edge corner (S) which constitutes the axis of rotation of said profile element (20).

3. A luggage bar assembly according to claim 1, characterized in that said longitudinal portion of said profile element (20a) engages with the lower surface of the longitudinal end of the bar (10), said longitudinal portion being provided with a transverse ridge (30) which constitutes the axis of rotation of said profile element (20).

4. A luggage bar assembly according to any one of the preceding claims, characterized in that said flattened coupling portion (22,240) ends with a flap (24) folded at right angle.

5. A luggage bar assembly according to one one of the preceding claims, characterized in that said flattened coupling portion (22,240) is stiffened by stiffening ridges (23).

6. A luggage bar assembly according any one of the preceding claims, characterized in that the bar (10) has a slight camber (c) with the concavity directed towards the roof of the vehicle.

7. A luggage bar assembly according to claim 6, characterized in that the bar (10) is stiffened by an internal tension element (31) which, by virtue of the camber (c) of said bar, is arranged at least partially below the neutral axis of said bar to absorb the traction stresses produced by the bar flexing.

8. A luggage bar assembly according to claim 7, characterized in that said tension element (31) is pretensioned (32,33).

9. A luggage bar assembly according to any one of the preceding claims, characterized in that each upright (20) supports a corresponding removable coupling portion (240), the coupling portions being replaceable with others with a different profile according to the type of vehicle on which the structure is mounted.

10. A luggage bar assembly according to claim 9, characterized in that each upright (20) has a base plate (201) which has at least one opening (202) and at least one protruding lug (203) which co-operate with a tab (241) and respectively an opening (242) of the corresponding coupling portion (240), the co-operating opening (202) and lug (241) being T-shaped.

**Patentansprüche**

1. Gepäckträgeranordnung mit Stütz- und Verbindungsmitteln, in der eine Trägerstange (10) mit Endstützen (20, 20a) versehen ist, die zum Zusammenwirken mit korrespondierenden Unterschneidungen der Fahrzeugkarosserie vorgesehene Verbindungsstücke (22, 240) aufweisen, wobei wenigstens eine Endstütze mit der Trägerstange mit Hilfe einer durch einen Verriegelungsbolzen (25) bewirkten verriegelbaren Verbindung gekoppelt ist, die bei ihrer Entriegelung ein Abspreizen der Endstütze (20, 20a) durch eine Rotation in einer die Trägerstange beinhaltenden Ebene erlaubt, um die Verbindungsstücke (22, 240) in Wirkverbindung mit oder außer Wirkverbindung von der zugehörigen Unterschneidung zu bringen, wobei die Verriegelung der Verbindung eine entgegengesetzte Rotation der Stütze bewirkt, wodurch sie ebenfalls quer zum Fahrzeug verriegelt wird, **dadurch gekennzeichnet, daß** wenigstens eine Stütze ein einziges festes Winkelprofilelement (20, 20a) ist, das an seinen gegenüberliegenden Enden als ein abgeflachtes Verbindungsstück (22) und als kanalähnlicher longitudinaler Abschnitt (21) zum passigen Zusammenwirken der Stütze mit dem longitudinalen Ende der Trägerstange (10) im verriegelten Zustand ausgebildet ist, daß der Verriegelungsbolzen der Verbindung quer zu dem kanalähnlichen longitudinalen Abschnitt (21) und dem zur gegenseitigen Verriegelung vorgesehenen longitudinalen Ende der Trägerstange (10) angeordnet ist, so daß ein Festziehen des Verriegelungsbolzens (25) zu einem verriegelten passigen Zusammenwirken des kanalähnlichen longitudinalen Abschnitts (21) mit dem longitudinalen Ende der Trägerstange (10) führt und ein Lösen des Verriegelungsbolzens (25) eine Rotation des festen Winkelprofilelements (20, 20a) im wesentlichen in einer die Trägerstange (10) enthaltenden Ebene ermöglicht, wodurch ein ausreichendes Abspreizen (4) des Verbindungsstücks (22, 240) von den Unterschneidungen (SQ) erfolgt.

2. Gepäckträgeranordnung nach Anspruch 1, dadurch gekennzeichnet, daß der longitudinale Abschnitt (21) des Profilelements (20) mit der oberen Oberfläche des longitudinalen Endes der Trägerstange (10) zusammenwirkt und der'longitudinale Abschnitt eine Endkante (S) ausbildet, die die Rotationsachse des Profilelements (20) bildet.

3. Gepäckträgeranordnung nach Anspruch 1, dadurch gekennzeichnet, daß der longitudinale Abschnitt des Profilelements (20a) mit der unteren Oberfläche des longitudinalen Endes der Trägerstange (10) zusammenwirkt und mit einer Querrippe (30) versehen ist, die die Rotationsachse des Profilelements (20) bildet.

4. Gepäckträgeranordnung nach einem der vorhergehenden Ansprüche, dadurch gekennzeichnet, daß das abgeflachte Verbindungsstück (22, 240) in einem rechtwinklig abgewinkelten Schenkel (24) endet.

5. Gepäckträgeranordnung nach einem der vorhergehenden Ansprüche, dadurch gekennzeichnet, daß das abgeflachte Verbindungsstück (22, 240) mit Versteifungsrippen (23) versteift ist.

6. Gepäckträgeranordnung nach einem der vorhergehenden Ansprüche, dadurch gekennzeichnet, daß die Trägerstange (10) eine leichte Wölbung (c) aufweist, deren konkave Oberfläche zum Dach des Fahrzeugs gerichtet ist.

7. Gepäckträgeranordnung nach Anspruch 6, dadurch gekennzeichnet, daß die Trägerstange (10) durch ein inneres Spannelement (31) verstärkt ist, das durch die Wölbung (c) der Trägerstange wenigstens teilweise unterhalb der neutralen Achse der Trägerstange angeordnet ist, um durch die Verbiegung der Trägerstange entstehende Zugspannungen zu absorbieren.

8. Gepräckträgeranordnung nach Anspruch 7, dadurch gekennzeichnet, daß das Spannelement (31) vorgespannt (32, 33) ist.

9. Gepäckträgeranordnung nach einem der vorhergehenden Ansprüche, dadurch gekennzeichnet, daß an jeder Stütze (20) ein zugehöriges, abnehmbares Verbindungsstück (240) montiert ist, das durch ein anderes mit einem entsprechend dem Fahrzeugtyp, auf dem die Anordnung montiert werden soll, anderen Profil ersetzbar ist.

10. Gepäckträgeranordnung nach Anspruch 9, dadurch gekennzeichnet, daß jede Stütze (20) eine Basisplatte (201) mit wenigstens einer Öffnung (202) und wenigstens einem vorstehenden Ansatz (203) aufweisen, die mit einem Vorsprung (241) bzw. einer Öffnung (242) des zugehörigen Verbindungsstücks (240) zusammenwirken, wobei die Öffnung (202) und der Vorsprung (241), die zusammenwirken, T-förmig ausgebildet sind.

**Revendications**

1. Dispositif à barre pour galerie ou porte-bagages comportant des moyens d'appui et d'accouplement, dans lequel la barre (10) présente des montants d'extrémité (20;20a) incluant des parties d'accouplement (22;240) adaptées pour engager des contre-dépouilles correspondantes (SQ) de la carrosserie du vehicule, au moins un desdits montants étant relié à la barre par des moyens de liaison verrouillables comportant un boulon de verrouillage (25), qui, quand ils sont déverrouillés, permettent au montant (20;20a) d'être déplacé par rotation dans un plan contenant l'axe de la barre (10), pour permettre l'engagement, ou le désengagement, des parties d'accouplement (22;240) avec ladite contre-dépouille, ou de celle-ci, le verrouillage des moyens de liaison provoquant une rotation inverse du montant et le verrouillant en conséquence, également transversalement par rapport au véhicule, ledit dispositif à barre pour galerie ou porte-bagages étant caractérisé en ce que ledit montant est un élément profilé rigide unique formant un angle (20;20a) définissant, aux extrémités opposées de celui-ci, une partie d'accouplement aplatie (22) et une partie longitudinale en forme de canal (21) pour l'accouplement dans une position verrouillée du montant avec l'extrémité longitudinale de la barre (10), ledit boulon de verouillage desdits moyens de liaison étant prévu transversalement à ladite partie longitudinale en forme de canal (21) et à ladite extrémité longitudinale de la barre (10) pour le verrouillage mutuel de celles-ci, le serrage du boulon de verrouillage fournissant ainsi un accouplement verrouillé de la partie longitudinale en forme de canal (21) avec l'extrémité longitudinale de la barre (10), et le desserrage du boulon de verrouillage (25) permettant ainsi une rotation dudit élément profilé rigide formant un angle (20;20a) sensiblement dans le plan contenant l'axe de la barre (10) de façon à fournir un déplacement adéquat (Y) de la partie d'accouplement (22; 240) par rapport aux contre-dépouilles (SQ).

2. Dispositif à barre pour galerie ou porte-bagages selon la revendication 1, caractérisé en ce que ladite partie longitudinale (21) dudit élément profilé (20) s'engage avec la surface supérieure de l'extrémité longitudinale de la barre (10), ladite partie longitudinale définissant un coin terminal (S) qui constitue l'axe de rotation dudit élément profilé (20).

3. Dispositif à barre pour galerie ou porte-bagages selon la revendication 1, caractérisé en ce que ladite partie longitudinale dudit élément profilé (20a) s'engage avec la surface inférieure de l'extrémité longitudinale de la barre (10), ladite partie longitudinale étant munie d'une nervure tranversale (30) qui constitue l'axe de rotation dudit élément profilé (20).

4. Dispositif à barre pour galerie ou porte bagages selon l'une quelconque des revendications précédentes, caractérisé en ce que ladite partie d'accouplement aplatie (22;240) se termine par un volet ou aile (24) plié à angle droit.

5. Dispositif à barre pour galerie ou porte-bagages selon l'une quelconque des revendications précédentes, caractérisé en ce que ladite partie d'accouplement aplatie (22;240) est rigidifiée par des nervures (23).

6. Dispositif à barre pour galerie ou porte-gagages selon l'une quelconque des revendications précédentes, caractérisé en ce que la barre (10) présente une légère courbure (c) dont la concavité est dirigée vers le toit du véhicule.

7. Dispositif à barre pour galerie ou porte-bagages selon la revendication 6, caractérisé en ce que la barre (10) est rigidifiée par un élément de tension interne (31) qui, grâce à la courbure (c) de ladite barre, est agencé au moins partiellement au-dessous de l'axe neutre de ladite barre pour absorber les contraintes de traction produites par la flexion de la barre.

8. Dispositif à barre pour galerie ou porte-bagages selon la revendication 7, caractérisé en ce que ledit élément de tension (31) est précontraint (32, 33).

9. Dispositif à barre pour galerie ou porte-bagages selon l'une quelconque des revendications précédentes, caractérisé en ce que chaque montant (20) supporte une partie d'accouplement amovible correspondante (240), les parties d'accouplement étant remplaçable par d'autres ayant un profil différent selon le type de véhicule sur lequel la structure est montée.

10. Dispositif à barre pour galerie ou porte-bagages selon la revendication 9, caractérisé en ce que chaque montant (20) présente une plaque de base (201) qui présente au moins une ouverture (202) et au moins une patte en saillie (203) qui coopèrent avec une patte (241) et, respectivement, une ouverture (242) de la partie d'accouplement correspondante (240), l'ouverture (202) et la patte (241) coopérantes présentant une forme de T.

Fig. 1

Fig. 2

Fig. 3

Fig. 4

_Fig. 5_

_Fig. 6_

_Fig. 7_

_Fig. 8_

_Fig. 9_

_Fig. 10_